# EUROPÄISCHE PATENTANMELDUNG

(11) **EP 1 035 707 A2**
(43) Veröffentlichungstag der Anmeldung: **13.09.2000**
(21) Anmeldenummer: 99440377.2
(22) Anmeldetag: 27.12.1999
(51) Int. Cl.: H04L 29/06, H04L 12/22

(54) **Verfahren, Erzeugungsmodul, Server, Steuermodul und Speichermittel zum Erstellen von Validierungsregeln**

(30) Priorität: 15.01.1999 DE 19901329
(71) Anmelder: ALCATEL, 75008 Paris (FR)
(72) Erfinder: Hemzal, Georg, 12439 Berlin (DE)
(74) Vertreter: Brose, Gerhard, Dipl.-Ing.

(57) **Zusammenfassung**

Die vorliegende Erfindung betrifft ein Verfahren zum Erstellen von Validierungsregeln, mit denen ein Validierungsmodul als Betriebsparameter für Telekommunikationssysteme einsetzbare Konfigurationsdaten validieren kann, sowie ein Erzeugungsmodul, einen Server, ein Steuermodul und ein Speichermittel hierfür. Bei dem Verfahren wird zunächst ein erster Validierungsregelsatz (BVR1, BVR2) mit mindestens einer in ersten, bedienerfreundlichen Sprache verfaßten Validierungsregel durch ein Erzeugungsmodul (TL) erfaßt. Dann überprüft das Erzeugungsmodul, ob die in dem Validierungsregelsatzes enthaltenen Validierungsregeln vorgegebenen syntaktischen und semantischen Regeln entsprechen, und übersetzt die Validierungsregeln des Validierungsregelsatzes von der ersten Sprache in eine zweite, von dem Validierungsmodul auswertbare Sprache, falls die Validierungsregeln in der ersten Sprache der syntaktischen und semantischen Überprüfung standgehalten haben. Die in die zweite Sprache übersetzten Validierungsregeln des Validierungsregelsatzes stellt das Erzeugungsmodul in Form eines zweiten Validierungsregelsatzes (VR1, VR2) anschließend zu einer weiteren Verwendung durch das Validierungsmodul bereit.

## Beschreibung

Die vorliegende Erfindung betrifft ein Verfahren zum Erstellen von Validierungsregeln, mit denen ein Validierungsmodul als Betriebsparameter für Telekommunikationssysteme einsetzbare Konfigurationsdaten validieren kann, sowie ein Erzeugungsmodul gemäß dem Oberbegriff des Anspruchs 5 hierfür, einen Server gemäß dem Oberbegriff des Anspruchs 6 hierfür, ein Steuermodul und ein Speichermittel hierfür.

Telekommunikationssysteme, z.B. Vermittlungsstellen, Zugangssysteme, Cross-Connects, Netzwerk Management Systeme, Rechnernetzwerke etc., werden im allgemeinen durch in gewissen Grenzen wählbare Konfigurationsdaten an spezielle Erfordernisse angepaßt, die durch den jeweiligen Einsatzbereich bestimmt werden. Gemäß der Vorgaben solcher Konfigurationsdaten kann eine in einem Telekommunikationssystem enthaltene Steuerungssoftware das Telekommunikationssystem in dem jeweiligen Einsatzbereich bestimmungsgemäß steuern. Einer modernen digitalen Vermittlungsstelle muß z.B. durch entsprechende Konfigurationsdaten unter anderem vorgegeben werden, welche Teilnehmeranschlüsse die Vermittlungsstelle zu bedienen hat, welche Rufnummern diesen jeweils zugeordnet sind und welche Telekommunikationsdienste den jeweiligen Teilnehmeranschlüssen zur Verfügung gestellt werden. Die Konfigurationsdaten eines solchen Teilnehmeranschlusses müssen dabei vorgegebenen Regeln genügen. So darf z.B. eine Rufnummer eines Teilnehmeranschlusses nur Zahlzeichen und keine Buchstabenzeichen enthalten und muß aus einer vorgegebenen Anzahl von Zahlzeichen bestehen. Ferner ist es meist nur dann möglich, einen Telekommunikationsdienst einem Teilnehmeranschluß zuzuweisen, wenn dessen Rufnummer zu einer für den jeweiligen Telekommunikationsdienst vorgesehenen Rufnummerngruppe gehört. Beispielsweise können für ein ISDN-Telekommunikationsnetz (Integrated Services Digital Network) definierte Dienste in vollem Umfang nur für einen ISDN-fähigen Teilnehmeranschluß eingerichtet werden. Bereits für einen einzelnen Teilnehmeranschlusses sind also die bei der Erstellung von dessen Konfigurationsdaten einzuhaltenden Bedingungen schon sehr umfangreich und kompliziert. Da jedoch zwischen einzelnen Teilnehmeranschlüssen einer Vermittlungsstelle in Bezug auf Konfigurationsdaten wechselseitige Beziehungen bestehen, z.B. weil mehrere Teilnehmeranschlüsse an eine gemeinsame Anschlußbaugruppe angeschlossen werden, müssen auch die durch die wechselseitigen Beziehungen erforderlichen Bedingungen bei der Erstellung der Konfigurationsdaten eingehalten werden. Da eine Steuerungssoftware eines Telekommunikationssystemes nur dann korrekt arbeiten kann, wenn die ihr als Betriebsparameter vorgegebenen Konfigurationsdaten richtig und in sich konsistent sind, müssen die Konfigurationsdaten vor deren Eingabe in das Telekommunikationssystem geprüft werden. Ein solcher Vorgang wird als Validierung bezeichnet.

Da Konfigurationsdaten für ein Telekommunikationssystem meist sehr umfangreich sind und komplizierten Bedingungen genügen müssen, werden solche Konfigurationsdaten mit Hilfe eines Konfigurationssystemes erstellt, das jeweils für Konfigurationsdaten eines Telekommunikationssystem oder eines Typs eines solchen Telekommunikationssystemes geeignet ist. Dann werden von einem Computer mit Hilfe eines Editors Konfigurationsdaten erfaßt und nach der Eingabe mit Hilfe eines "Validierungsmodul" genannten Programmodules einer Überprüfung ihrer Konsistenz, also einer Validierung unterzogen. Erst dann werden die Konfigurationsdaten in eine Datenbank geschrieben und anschließend in einen Zustand weiterverarbeitet, in dem sie in ein "Zielsystem" genanntes Telekommunikationssystem geladen werden können. Sowohl der Editor als auch das Programmodul zur Validierung der Konfigurationsdaten und die in dem Validierungsmodul enthaltenen Validierungsregeln können - wie allgemein üblich - speziell für die zu bearbeitenden Konfigurationsdaten vorgesehen und entsprechend programmiert sein.

Damit ein Validierungsprogrammodul oder auch ein Konfigurationssystem für verschiedene Typen und Varianten eines Zielsystemes anpaßbar ist, können die Validierungsregeln zur Validierung der jeweiligen Konfigurationsdaten auch in einem separaten Validierungsregelsatz abgelegt sein, den das Validierungsmodul, zu der jeweiligen Validierung einliest und auswertet. Ein solcher Validierungsregelsatz ist jeweils für einen bestimmten Typ von einem Zielsystem geeignet. Dann muß nicht ein jeweils für neue Konfigurationsdaten geeignetes neues Validierungsprogrammodul erstellt werden oder ein bestehendes Validierungsprogrammodul zumindest teilweise neu programmiert und anschließend compiliert werden, sofern sich die Bedingungen ändern, denen Konfigurationsdaten genügen müssen, z.B. weil eine neue Steuersoftware des Zielsystemes Konfigurationsdaten in anderer Form oder in anderem Umfang verlangt. Allerdings ist das Erstellen eines neuen, für das Validierungsmodul auswertbaren Validierungsregelsatzes für ein Zielsystem einerseits kompliziert und unter Umständen sogar nur mit Hilfe von Programmierwerkzeugen möglich. Andrerseits unterlaufen dabei leicht Fehler, die nur durch umfangreiches Testen des neuen oder des modifizierten Validierungsregelsatzes ermittelt werden können. Zu einem solchen Test muß dann jeweils das Validierungsmodul gestartet werden, das in dem zu testenden Validierungsregelsatz enthaltene Fehler mit Hilfe einer eventuell vorhandenen Fehlerroutine ermitteln und gegebenenfalls anzeigen kann. Das Validierungsmodul kann nämlich nur bei einem fehlerfrei aufgebauten Validierungsregelsatz eine korrekte und vollständige Validierung durchführen. Einerseits wird das Validierungsmodul durch eine solche Fehlerroutine in seinem Umfang wie auch in seinen Funktionen komplexer, und andrerseits verbraucht das Durchlaufen der Fehlerroutinen bei jedem Valdierungsvorgang - auch mit einem fehlerfreien Validierungsregelsatz - kostbare Betriebszeit des Rechners, auf dem das Validierungsmodul betrieben wird. Eine weitere, sowohl umständliche als auch schwierige Methode, einen Validierungsregelsatz zu testen, besteht darin, mit diesem Validierungsregelsatz Konfigurationsdaten zu validieren und dann das Ergebnis der Validierung zu analysieren.

Aufgabe der Erfindung ist es, einen Validierungsregelsatz effizient und fehlerfrei zu erstellen, mit dem ein Validierungsmodul als Betriebsparameter für Telekommunikationssysteme einsetzbare Konfigurationsdaten validieren kann.

Diese Aufgabe wird durch ein Verfahren zum Erstellen von Validierungsregeln, mit denen ein Validierungsmodul als Betriebsparameter für Telekommunikationssysteme einsetzbare Konfigurationsdaten validieren kann, sowie ein Erzeugungsmodul gemäß der technischen Lehre des Anspruchs 5, einen Server gemäß der technischen Lehre des Anspruchs 6, ein Steuermodul gemäß der technischen Lehre des Anspruchs 7 und ein Speichermittel gemäß der technischen Lehre des Anspruchs 8 gelöst. Weitere vorteilhafte Ausgestaltungen der Erfindung sind den abhängigen Ansprüchen und der Beschreibung zu entnehmen.

Der Erfindung liegt hierbei der Gedanke zugrunde, ein Erzeugungsmodul, ein auf einem Computer ausführbares Programmodul, so zu gestalten, daß das Erzeugungsmodul Validierungsregeln erfassen kann, die in einer bedienerfreundlichen Sprache verfaßt sind. Diese Validierungsregeln sind jeweils für die Validierung von Konfigurationsdaten eines bestimmten Telekommunikationssystemes geeignet und in einem Validierungsregelsatz enthalten. Das Erzeugungsmodul überprüft dann, ob die in dem Validierungsregelsatzes enthaltenen Validierungsregeln vorgegebenen syntaktischen und semantischen Regeln entsprechen. Nur wenn dies der Fall ist, übersetzt das Erzeugungsmodul die Validierungsregeln des Validierungsregelsatzes von der bedienerfreundlichen Sprache in eine zweite, von einem Validierungsmodul auswertbare Sprache und stellt für das Validierungsmodul die so erzeugten Validierungsregeln anschließend zur späteren Auswertung bereit. Die Validierungsregeln müssen dann von einem Bediener nicht mehr in einer komplizierten, durch das Validierungsmodul auswertbaren Sprache erstellt werden, sondern können aus einfachen, bedienerfreundlichen Sprachelementen bestehen. Außerdem kann das Validierungsmodul die Validierungsregeln ohne weitere Überprüfung auswerten, da ja das Erzeugungsmodul bereits die Validierungsregeln auf Fehler überprüft hat.

In einer Ausgestaltung der Erfindung liest das Erzeugungsmodul eine Sprachdefinitionsdatei ein, in der Anweisungen zur Auswertung von Sprachelementen der ersten bedienerfreundlichen Sprache enthalten sind, so daß das Erzeugungsmodul Validierungsregeln in der bedienerfreundlichen Sprache anhand dieser Anweisungen syntaktisch und semantisch überprüfen sowie in die zweite Sprache übersetzen kann. Damit kann die bedienerfreundliche Sprache bei Bedarf um neue Sprachelemente erweitert werden, ohne daß das Erzeugungsmodul an sich zur Verarbeitung dieser neuen Sprachelemente neu erstellt oder modifiziert werden muß. In einer weiteren Ausgestaltung der Erfindung erzeugt das Erzeugungsmodul aus den Validierungsregeln in der bedienerfreundlichen Sprache Funktionsblöcke, anhand derer das Validierungsmodul Konfigurationsdaten überprüfen kann. Die Funktionsblöcke können z.B. sogenannte Makros sein, die z.B. von dem Validierungsmodul interpretiert werden können, oder auch sogenannte Funktionen, die von dem Validierungsmodul angebunden, also "gelinkt" werden können. Weiter kann das Erzeugungsmodul auch Textbausteine zu den Validierungsregeln in der von dem Validierungsmodul auswertbaren Sprache hinzufügen. Mit diesen Textbausteinen kann das Validierungsmodul dann bei einer Validierung von Konfigurationsdaten Meldungen erzeugen, mit denen das Validierungsmodul einem Bediener den Erfolg der Validierung oder auch qualifiziert deren Mißerfolg anzeigen kann.

Im folgenden werden die Erfindung und ihre Vorteile anhand eines Ausführungsbeispiels unter Zuhilfenahme der Zeichnungen dargestellt.
- Figur 1: zeigt ein sehr schematisches Beispiel einer Anordnung zur Ausführung des erfindungsgemäßen Verfahrens mit einem erfindungsgemäßen Erzeugungsmodul (TL), erfindungsgemäß erstellten Validierungsregelsätzen (VR1, VR2) sowie deren Verwendung durch ein Validierungsmodul (VM), das nach einem der Validierungsregelsätze Konfigurationsdaten (KD) validiert.
- Figur 2: zeigt ein Ablaufdiagramm eines erfindungsgemäßen Erzeugungsmodules (TL)
- Figur 3: zeigt einen erfindungsgemäßen Server (SER) zur Ausführung des erfindungsgemäßen Verfahrens.

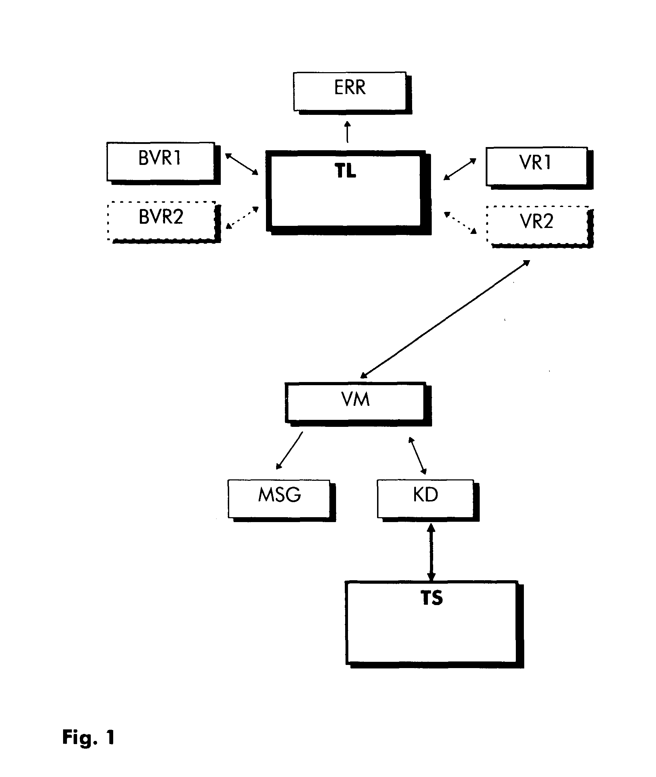

Figur 1 zeigt ein sehr schematisches Beispiel einer Anordnung zur Ausführung des erfindungsgemäßen Verfahrens. Dort ist ein erfindungsgemäßes Erzeugungsmodul TL dargestellt, das als ein Programmodul auf einem Computer, z.B. einem Personal Computer oder einer Workstation, ausführbar ist. Das Erzeugungsmodul TL erzeugt aus Basis-Validierungsregelsätzen, beispielhaft dargestellt durch Quellregelsätze BVR1 und BVR2, nach deren jeweiliger semantischen und syntaktischen Überprüfung Validierungsregelsätze VR1 bzw. VR2. Die Quellregelsätze BVR1 und BVR2 enthalten eine oder mehrere Validierungsregeln, die in einer einfachen, bedienerfreundlichen, im folgenden als "Basissprache" bezeichneten Sprache definiert sind. Falls bei der semantischen und syntaktischen Überprüfung Fehler auftreten, meldet das Erzeugungsmodul TL diese mit Hilfe einer Meldenachricht ERR. Die Validierungsregelsätze VR1 und VR2 können von einem Validierungsmodul VM zur Validierung von Konfigurationsdaten KD ausgewertet werden, die als Betriebsparameter für ein Telekommunikationssystem dienen und üblicherweise in Tabellenform angeordnet sind. Ein Beispiel für ein Telekommunikationssystem ist in Form eines Zielsystemes TS in Figur 1 gezeigt. Die Konfigurationsdaten KD können in das Zielsystem TS als Betriebsparameter zu dessen Konfiguration geladen werden. Das Zielsystem TS kann z.B. eine Vermittlungsstelle oder ein Netzwerk-Management-System sein. Die Konfigurationsdaten KD enthalten z.B. Daten über Verbindungen, die von dem Zielsystem TS geschaltet werden können oder Daten, die von dem Zielsystem TS bediente Teilnehmeranschlüsse definieren. Das Zielsystem TS kann jedoch auch z.B. eine Fernwirk-Unterstation sein. Die Konfigurationsdaten KD enthalten dann z.B. Daten über Meßwerte und Befehle, die die Fernwirk-Unterstation erfassen bzw. ausgeben soll. In dem Beispiel aus Figur 1 sei angenommen, daß die Konfigurationsdaten KD nach dem Validierungsregelsatz VR2 zu validieren sind. Diesen liest das Validierungsmodul VM ein und validiert nach dessen Vorgaben die Konfigurationsdaten KD. Das Ergebnis der Prüfung meldet das Validierungsmodul VM mit einer Meldenachricht MSG, z.B. in Form einer Bildschirmausgabe oder einer Druckerausgabe. Mit Hilfe der Meldenachricht MSG können bei der Prüfung aufgetretene Fehler auch detailliert angezeigt werden. Wenn die von dem Validierungsmodul VM überprüften Konfigurationsdaten KD der Überprüfung standgehalten haben, also konsistent sind, können die Konfigurationsdaten KD in das Zielsystem TS geladen und von diesem als Betriebsparameter übernommen werden.

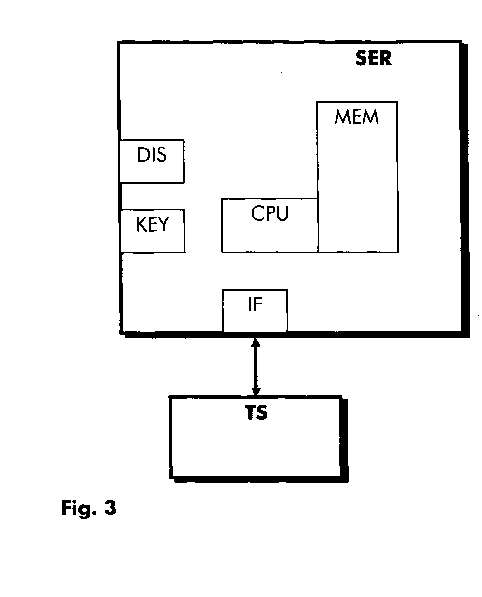

Ein Computer zur Ausführung des Erzeugungsmodules TL ist in einigen wesentlichen Komponenten ist in Figur 3 als Server SER dargestellt. Der Server SER kann z.B. Teil eines Netzwerk-Management-Systemes sein. Der Server SER enthält ein Steuermittel CPU, z.B. einen Prozessor, zur Ausführung maschinenlesbarer Befehle, z.B. zur Ausführung des Erzeugungsmodules TL. Ferner weist der Server SER einen Speicher MEM auf, in dem das Erzeugungsmodul TL gespeichert sein kann. Außerdem verfügt der Server SER als Eingabemittel und Ausgabemittel über ein Tastenfeld KEY und über eine Anzeigevorrichtung DIS, z.B. um Daten auszugeben, die von dem Erzeugungsmodul TL erzeugt werden, oder um Daten an das Erzeugungsmodul TL zu senden. Ferner verfügt der Server SER über eine Schnittstellenvorrichtung IF, über die er Daten mit dem aus Figur 1 bekannten Zielsystem TS austauschen kann. Die Komponenten des Servers SER sind durch in Figur 3 nicht dargestellte Verbindungen miteinander verbunden. Ein Betriebssystem, z.B. UNIX oder DOS (Disc Operating System), verwaltet die Betriebsmittel des Servers SER und steuert unter anderem die Ausführung des Erzeugungsmodules TL. Zur weiteren Darstellung der Erfindung wird wieder die Figur 1 betrachtet, wobei auch auf Komponenten des in Figur 3 dargestellten Servers SER verwiesen wird.

Das Erzeugungsmodul TL erzeugt aus einem Quellregelsatz BVR1 den Validierungsregelsatz VR1 und aus einem Quellregelsatz BVR2 den Validierungsregelsatz VR2. Die Regelsätze BVR1 und BVR2 stehen beispielhaft für weitere, in Figur 1 nicht dargestellte Basis-Validierungsregelsätze. Das Erzeugungsmodul TL liest die Regelsätze BVR1 und BVR2 z.B. aus dem Speicher MEM aus oder über die Schnittstellenvorrichtung IF ein. Die Regelsätze BVR1 und BVR2 können auch von dem Erzeugungsmodul TL z.B. mit Hilfe des Tastenfeldes KEY und der Anzeigevorrichtung DIS erfaßt werden. Das Erzeugungsmodul TL bietet dann einem Bediener Sprachelemente der Basissprache für die Definition von Validierungsregeln an. Es ist auch möglich, daß ein in Figur 1 nicht gezeigtes Programmodul die Quellregelsätze BVR1 und BVR2 erfaßt, z.B. ein Editor, der erfaßte Validierungsregeln z.B. in Form einer Datei an das Erzeugungsmodul TL übermittelt, die in dem Speicher MEM zwischengespeichert ist. Der Vorgang des Übermittelns sowie des Erfassens ist in Figur 1 durch Pfeile angedeutet.

Die Quellregelsätze BVR1 und BVR2 können Validierungsregeln in Form von sogenannten "A-Regeln", "B-Regeln", "C-Regeln" oder "D-Regeln" enthalten. Für eine Validierung von einzelnen Datenfeldern eines Datensatzes der Konfigurationsdaten KD eignen sich A-Regeln. Bedingungen zwischen Datenfeldern eines Datensatzes werden in B-Regeln festgelegt. C-Regeln definieren Bedingungen zwischen Datenfeldern unterschiedlicher Datensätze einer Tabelle, während D-Regeln Beziehungen zwischen Datenfeldern auch in unterschiedlichen Tabellen festlegen.

Anhand der Verarbeitung des Quellregelsatzes BVR1 wird im folgenden die Funktionsweise des Erzeugungsmodules TL detailliert dargestellt. Der Quellregelsatz BVR2 sowie der daraus erzeugte Validierungsregelsatz VR2 sind deshalb in Figur 1 lediglich in strichlierten Linien gezeigt. Nachdem das Erzeugungsmodul TL den Quellregelsatz BVR1 erfaßt hat, überprüft das Erzeugungsmodul TL, ob die in dem Quellregelsatz BVR1 enthaltenen und in der Basissprache verfaßten Validierungsregeln vorgegebenen syntaktischen und semantischen Regeln entsprechen. Die Basissprache ist eine Beschreibungssprache für Validierungsregeln. Die Basissprache enthält einerseits aus höheren Programmiersprachen bekannte Anweisungen wie z.B. Schleifenoperatoren, Sprungbedingungen etc.. Andrerseits bietet die Basissprache speziell für die Definition von Validierungsregeln abgestimmte Sprachelemente an. Mit diesen Sprachelementen können z.B. Auswahlbefehle zur Bildung von Teilmengen aus den Konfigurationsdaten KD definiert werden oder Vergleichsoperationen von ausgewählten Konfigurationsdaten KD mit Datenwerten oder Wertebereichen dargestellt werden. Das Erzeugungsmodul TL prüft zunächst, ob nur für die Basissprache vorbestimmte Sprachelemente in dem Quellregelsatz BVR1 enthalten sind. Dann stellt das Erzeugungsmodul TL fest, ob die Spachelemente korrekt angeordnet und vollständig sind, z.B. ob ein mit einem öffnenden Klammerzeichen beginnendes Sprachkonstrukt durch eine schließendes Klammerzeichen geschlossen ist. Weitere Überprüfungen sind möglich, werden hier aber nicht detailliert aufgeführt. Wenn bei den vorgenannten Überprüfungen das Erzeugungsmodul TL einen Fehler in dem Quellregelsatz BVR1 ermittelt, erzeugt das Erzeugungsmodul TL eine Fehlermeldung, indem es z.B. eine Meldenachricht an die Anzeigevorrichtung DIS zur Anzeige oder an einen in Figur 1 nicht dargestellten Drucker über die Schnittstellenvorrichtung IF zum Ausdruck sendet. Das Erzeugungsmodul TL kann auch die fehlerhafte Stelle innerhalb des Quellregelsatzes BVR1 mit Hilfe der Anzeigevorrichtung DIS und editieren und einem Bediener zur Korrektur anbieten. Nach einer Korrektur kann das Erzeugungsmodul TL z.B. über einen Tastendruck an dem Tastenfeld KEY damit beauftragen werden, den modifizierten Quellregelsatz BVR1 erneut zu überprüfen. Fehler in der Definition von Validierungsregeln in dem Quellregelsatz BVR1 können auf diese Weise leicht entfernt werden.

Wenn das Erzeugungsmodul TL den Quellregelsatz BVR1 für semantisch und syntaktisch einwandfrei befunden hat, kann das Erzeugungsmodul TL aus dem Quellregelsatz BVR1 den von dem Validierungsmodul VM lesbaren Validierungsregelsatz VR1 erzeugen. Die in dem Validierungsregelsatz VR1 enthaltenen Validierungsregeln müssen dazu semantischen und syntaktischen Regeln entsprechen, die durch die Gestaltung des Validierungsmodules VM vorgegeben sind. Zur Erfüllung solcher Regeln kann das Erzeugungsmodul TL die Validierungsregeln z.B. in einer sogenannten Interpretersprache verfassen. Validierungsregeln in einer solchen Interpretersprache kann das Validierungsmodul VM "interpretieren", also auswerten und in maschinenlesbare Befehle umsetzen. Diese Befehle kann dann das Steuermittel CPU ausführen. Die Interpretersprache kann eine proprietäre Interpretersprache sein, die nur von dem Validierungsmodul VM interpretiert werden kann, oder eine allgemein übliche Intpretersprache, z.B. die im Zusammenhang mit dem Betriebssystem UNIX gebräuchliche Interpretersprache PERL (Practical Extraction and Report Language). Das Erzeugungsmodul TL kann die Validierungsregeln in den Validierungsregelsatz VR1 auch bereits in einer von einem Prozessor ausführbaren Form einfügen, als sogenannte Funktionen, auch Bibliotheksfunktionen genannt. Das Validierungsmodul VM kann die Befehlssequenzen solcher Funktionen ohne vorherige Interpretation direkt in seine eigenen Befehlssequenzen einbinden. Ein solcher Vorgang wird auch als "dynamisches Linken" von Funktionen bezeichnet.

Bei dem Übersetzen der Validierungsregeln aus der Basissprache in die für das Validierungsmodul VM auswertbare Sprache, kurz "Zielsprache" genannt, analysiert das Erzeugungsmodul TL Quell-Sprachkonstrukte aus dem Quellregelsatz BVR1. Dabei stellt das Erzeugungsmodul TL fest, welche Sprachelemente in einem Quell-Sprachkonstrukt enthalten sind. Außerdem ermittelt das Erzeugungsmodul TL, wie diese Sprachelemente in dem Quell-Sprachkonstrukt angeordnet sind und welche semantische Bedeutung der jeweiligen Sprachelemente sich daraus ergibt. In Abhängigkeit von den so gewonnenen Analyseergebnissen übersetzt dann das Erzeugungsmodul TL Sprachelemente des Quell-Sprachkonstruktes in Sprachelemente der Zielsprache und kombiniert diese Sprachelemente gemäß der durch den Aufbau des Quell-Sprachkonstruktes vorgegebenen Weise. Anhand eines äußerst einfachen Beispieles soll diese Vorgehensweise im folgenden veranschaulicht werden. Aus einem Quell-Sprachkonstrukt "AB" mit den Sprachelementen "A" und "B", bildet das Erzeugungsmodul TL z.B. ein Ziel-Sprachkonstrukt "CD" mit den Sprachelementen "C" und "D". Lautet das Quell-Sprachkonstrukt jedoch "BA", besteht also aus den in jetzt umgekehrter Reihenfolge angeordneten Sprachelementen "A" und "B", bildet das Erzeugungsmodul TL statt eines Ziel-Sprachkonstruktes "DC" ein Ziel-Sprachkonstrukt "DGF", das zwar das bekannte, aus dem Sprachelement "B" erzeugte Sprochelement "D" enthält, anstatt eines Sprachelementes "C" jedoch eine Kombination aus einem Sprachelement "G" und einem Sprachelement "F". Weiterhin transferiert das Erzeugungsmodul TL in dem Quell-Sprachkonstrukt enthaltene Werte, mit denen z.B. in einer Validierungsregel zu prüfende Wertebereiche definiert werden, in das Ziel-Sprachkonstrukt. Das Erzeugungsmodul TL kann solche Werte unmodifiziert von einem Quell-Sprachkonstrukt in das jeweilige Ziel-Sprachkonstrukt übernehmen oder modifiziert nach vorbestimmten Regeln. Da die Sprachelemente und Sprachkonstrukte in der Zielsprache kompliziert aufgebaut sind, möglicherweise sogenannte Makros, also Befehlssequenzen oder sogar Bibliotheksfunktionen enthalten, können Validierungsregeln in der Basissprache wesentlich einfacher und damit auch fehlerärmer definiert werden.

Nachdem das Erzeugungsmodul TL den Validierungsregelsatz VR1 erzeugt hat, stellt das Erzeugungsmodul TL diesen zur Verwendung duch das Validierungsmodul VM bereit. Dazu speichert das Erzeugungsmodul TL den Validierungsregelsatz VR1 z.B. in dem Speicher MEM ab, wo ihn das Validierungsmodul VM auslesen kann. Der Validierungsregelsatz VR1 kann auch von einem Editor ausgewertet werden, der nach den Validierungsregeln des Validierungsregelsatzes VR1 die Konfigurationsdaten KD editieren kann und dabei schon bei einer Eingabe neuer Daten zu den Konfigurationsdaten KD ermitteln kann, ob die neue Eingabe mit den Validierungsregeln des Validierungsregelsatzes VR1 konform ist.

Vorteilhaft kann das Erzeugungsmodul TL nicht nur bereits vordefinierte Sprachelemente aus der Basissprache in die Zielsprache übersetzen, sondern auch zusätzliche, bedarfsweise definierte Sprachelemente der Basissprache. Dazu liest das Erzeugungsmodul TL eine in Figur 1 nicht dargestellte Sprachdefinitionsdatei ein, in der diese zusätzlichen Sprachelemente definiert sind. Die zusätzlichen Sprachelemente bestehen aus vorbestimmten einfachen Grundelementen, sind also Strukturen aus solchen Grundelementen. Die Grundelemente sind sowohl semantisch als auch syntaktisch definiert und deshalb durch das Erzeugungsmodul TL auswertbar. Damit kann die bedienerfreundliche Basissprache bei Bedarf um neue Sprachelemente erweitert werden, ohne daß das Erzeugungsmodul TL an sich zur Verarbeitung dieser neuen Sprachelemente neu erstellt oder modifiziert werden muß.

Das Erzeugungsmodul TL kann in die Validierungsregelsätze VR1 oder VR2 individuelle Vorgabeinformationen, z.B. Textelemente, für einen Inhalt der Meldenachricht MSG einfügen. Diese Vorgabeinformationen kann das Validierungsmodul VM zur Gestaltung der Meldenachricht MSG verwenden. So kann z.B. in den an aktuelle Erfordernisse anpaßbaren Validierungsregelsätzen VR1 oder VR2 für jede der dort enthaltenen Validierungsregeln festgelegt sein, welche Fehlermeldung von dem Validierungsmodul VM anzuzeigen ist, wenn bei einer Prüfung nach den Vorgaben der jeweiligen Validierungsregel ein Fehler auftritt. Damit kann z.B. ein neu in einen Validierungsregelsatz eingefügter Text für eine Fehlermeldung eine Ursache für einen Fehler näher präzisieren. Bei dem Einfügen der Vorgabeinformationen stellt das Erzeugungsmodul TL eine Verknüpfung jeweils zwischen einer Validierungsregel und einer Vorgabeinformation eine Verknüpfung her, z.B. in Form eines gemeinsamen Indexes, so daß das Validierungsmodul VM dann, wenn bei der Anwendung der jeweiligen Validierungsregel ein Fehler auftritt, die jeweilige Vorgabeinformation zur Erzeugung einer Fehlermeldung verwerten kann. Elemente zur Erzeugung der Vorgabeinformationen für die Validierungsregelsätze VR1 und VR2 können von einem Bediener vorgegeben und bereits in den Regelsätzen BVR1 und BVR2 enthalten sein. Das Erzeugungsmodul TL übersetzt diese Elemente in ein einheitliches, von dem Validierungsmodul VM auswertbares Format. Es ist jedoch auch möglich, daß das Erzeugungsmodul TL ohne eine Vorgabe in den Regelsätzen BVR1 und BVR2 selbst bestimmten Validierungsregeln in den Validierungsregelsätzen VR1 und VR2 Vorgabeinformationen für die Meldenachricht zuweist. Wenn z.B. eine Validierungsregel ein häufig verwendetes, standardisiertes Element für eine Längenprüfung enthält, kann das Erzeugungsmodul TL einen Vorgabetext "Element zu lang" dieser Validierungsregel zuordnen.

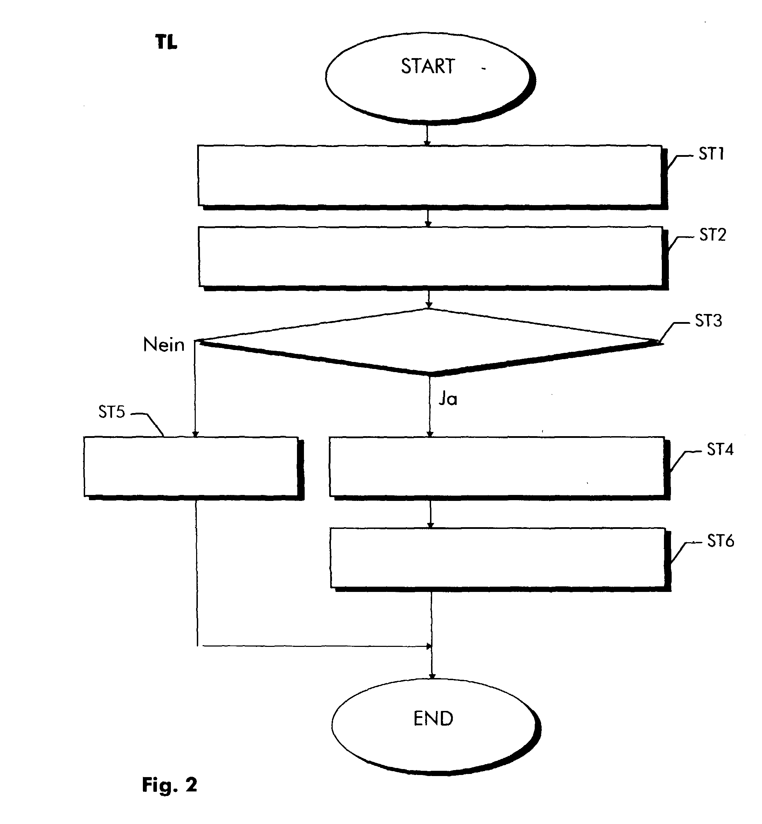

In Figur 2 ist das Erzeugungsmodul TL in seinen wesentlichen Funktionsschritten dargestellt. Das Erzeugungsmodul TL besteht, wie schon erwähnt, aus in einem Speicher gespeicherten und von einem Steuermittel, z.B. von einem Prozessor, lesbaren und unmittelbar ausführbaren oder mit Hilfe eines Interpreter-Programmodules indirekt auswertbaren Befehlssequenzen. Im Interesse einer leicht verständlichen Darstellung ist das Erzeugungsmodul TL in Figur 2 in Form eines Ablaufdiagrammes dargestellt, in dessen Ablauf einzelne Schritte ausgeführt werden. Die einzelnen Schritte stehen jeweils für einen einzelnen Befehl oder eine Folge von Befehlen, die jeweils eine funktionale Einheit, eine sogenannte Funktion, bilden. Die Anzahl der Schritte in Figur 2 ist als beispielhaft für eine praxisgerechte Lösung anzusehen. Ausgehend von einem Startfeld START erfaßt das Erzeugungsmodul TL in einem Schritt ST1 den Quellregelsatz BVR1, die z.B. über das Tastenfeld KEY an das Erzeugungsmodul TL gesendet werden. Die Anweisungen des Schrittes ST1 sind in einer Empfangsfunktionseinheit, z.B. in einem Unterprogramm, zusammengefaßt. In einem Schritt ST2 überprüft das Erzeugungsmodul TL, ob die Validierungsregeln des Quellregelsatzes BVR1 vorgegebenen syntaktischen und semantischen Regeln entsprechen. Diese Regeln können dem Erzeugungsmodul TL auch in Form einer Steuerdatei vorgegeben werden, die das Erzeugungsmodul TL in dem Schritt ST1 einlesen kann. In einem Schritt ST3 verzweigt das Erzeugungsmodul TL abhängig von dem Ergebnis der Überprüfung aus Schritt ST2. Wenn die syntaktischen und semantischen Regeln von den Validierungsregeln des Quellregelsatzes BVR1 nicht erfüllt worden sind, verzweigt das Erzeugungsmodul TL auf einem Pfad "Nein" in einen Schritt ST5 und erzeugt eine Fehlermeldung. Ansonsten verzweigt das Erzeugungsmodul TL auf einem Pfad "Ja " in einen Schritt ST5, in welchem das Erzeugungsmodul TL die Validierungsregeln des Quellregelsatzes BVR1 in die von dem Validierungsmodul VM auswertbare, Zielsprache übersetzt und die Validierungsregeln in Form des Validierungsregelsatzes VR1 ausgibt. Das Erzeugungsmodul TL endet sowohl nach dem Schritt ST5 als auch nach dem Schritt ST6 in einem Schritt END.

## Patentansprüche

1. Verfahren zum Erstellen von Validierungsregeln, mit denen ein Validierungsmodul (VM) als Betriebsparameter für Telekommunikationssysteme einsetzbare Konfigurationsdaten (KD) validieren kann, **gekennzeichnet durch** die Schritte:
- Erfassen eines ersten Validierungsregelsatzes (BVR1, BVR2) mit mindestens einer in einer ersten Sprache verfaßten Validierungsregel durch ein Erzeugungsmodul (TL),
- Überprüfen, ob die in dem ersten Validierungsregelsatz enthaltenen Validierungsregeln vorgegebenen syntaktischen und semantischen Regeln entsprechen, durch das Erzeugungsmodul,
- Übersetzen der Validierungsregeln des ersten Validierungsregelsatzes von der ersten Sprache in eine zweite, von dem Validierungsmodul auswertbare Sprache durch das Erzeugungsmodul, falls die Validierungsregeln in der ersten Sprache der syntaktischen und semantischen Überprüfung standgehalten haben,
- Ausgeben einer Fehlermeldung durch das Erzeugungsmodul, falls die Validierungsregeln in der ersten Sprache der syntaktischen und semantischen Überprüfung nicht standgehalten haben, und
- Bereitstellen der in die zweite Sprache übersetzten Validierungsregeln in Form eines zweiten Validierungsregelsatzes (VR1, VR2) durch das Erzeugungsmodul.

2. Verfahren nach Anspruch 1, dadurch gekennzeichnet, daß das Erzeugungsmodul (TL) vorgegebene Sprachdefinitionen einlesen kann, in denen Anweisungen zur Auswertung von Sprachelementen der ersten Sprache enthalten sind, und daß das Erzeugungsmodul die in dem ersten Validierungsregelsatz (BVR1, BVR2) enthaltenen Validierungsregeln mit Hilfe dieser Anweisungen syntaktisch und semantisch überprüfen sowie in die zweite Sprache übersetzen kann.

3. Verfahren nach Anspruch 1, dadurch gekennzeichnet, daß bei dem Übersetzen der Validierungsregeln des ersten Validierungsregelsatzes (BVR1, BVR2) in die zweite Sprache Funktionsblöcke erzeugt werden, mit denen das Validierungsmodul (VM) die Konfigurationsdaten (KD) prüfen kann.

4. Verfahren nach Anspruch 1, dadurch gekennzeichnet, daß das Erzeugungsmodul (TL) bei dem Übersetzen Vorgabeinformationen in den zweiten Validierungsregelsatz (VR1, VR2) einfügen kann, anhand derer das Validierungsmodul (VM) eine Meldenachricht (MSG) mit einer Information über den Erfolg der Prüfung erzeugen kann.

5. Erzeugungsmodul (TL) zum Erstellen von Validierungsregeln, mit denen ein Validierungsmodul (VM) als Betriebsparameter für Telekommunikationssysteme einsetzbare Konfigurationsdaten (KD) validieren kann, **dadurch gekennzeichnet, daß** das Erzeugungsmodul eine Empfangsfunktionseinheit (ST1) aufweist, die so ausgestaltet ist, daß das Erzeugungsmodul einen ersten Validierungsregelsatz (BVR1, BVR2) mit mindestens einer in einer ersten Sprache verfaßten Validierungsregel erfassen kann, daß das Erzeugungsmodul eine Überprüfungsfunktionseinheit (ST2) aufweist, die so ausgestaltet ist, daß das Erzeugungsmodul überprüfen kann, ob die in dem ersten Validierungsregelsatzes enthaltenen Validierungsregeln vorgegebenen syntaktischen und semantischen Regeln entsprechen, daß das Erzeugungsmodul eine Übersetzungsfunktionseinheit (ST4) aufweist, die so ausgestaltet ist, daß das Erzeugungsmodul die Validierungsregeln des ersten Validierungsregelsatzes von der ersten Sprache in eine zweite, von dem Validierungsmodul auswertbare Sprache übersetzen kann, falls die Validierungsregeln in der ersten Sprache der syntaktischen und semantischen Überprüfung standgehalten haben, daß das Erzeugungsmodul eine Meldefunktionseinheit (ST5) aufweist, die so ausgestaltet ist, daß das Erzeugungsmodul eine Fehlermeldung ausgeben kann, falls die Validierungsregeln in der ersten Sprache der syntaktischen und semantischen Überprüfung nicht standgehalten haben, und daß das Erzeugungsmodul eine Bereitstellungsfunktionseinheit (ST6) aufweist, die so ausgestaltet ist, daß das Erzeugungsmodul die in die zweite Sprache übersetzten Validierungsregeln in Form eines zweiten Validierungsregelsatzes (VR1, VR2) bereitstellen kann.

6. Server (SER) zum Erstellen von Validierungsregeln, mit denen ein Validierungsmodul als Betriebsparameter für Telekommunikationssysteme einsetzbare Konfigurationsdaten validieren kann, **dadurch gekennzeichnet, daß** der Server Empfangsmittel (KEY, IF) aufweist, die so ausgestaltet sind, daß der Server einen ersten Validierungsregelsatz (BVR1, BVR2) mit mindestens einer in einer ersten Sprache verfaßten Validierungsregel erfassen kann, daß der Server Überprüfungsmittel aufweist, die so ausgestaltet sind, daß der Server überprüfen kann, ob die in dem ersten Validierungsregelsatzes enthaltenen Validierungsregeln vorgegebenen syntaktischen und semantischen Regeln entsprechen, daß der Server Übersetzungsmittel aufweist, die so ausgestaltet sind, daß der Server die Validierungsregeln des ersten Validierungsregelsatzes von der ersten Sprache in eine zweite, von dem Validierungsmodul auswertbare Sprache übersetzen kann, falls die Validierungsregeln in der ersten Sprache der syntaktischen und semantischen Überprüfung standgehalten haben, daß der Server Meldemittel (DIS) aufweist, die so ausgestaltet sind, daß der Server eine Fehlermeldung ausgeben kann, falls die Validierungsregeln in der ersten Sprache der syntaktischen und semantischen Überprüfung nicht standgehalten haben, und daß der Server Bereitstellungsmittel (MEM, IF) aufweist, die so ausgestaltet sind, daß der Server die in die zweite Sprache übersetzten Validierungsregeln in Form eines zweiten Validierungsregelsatzes (VR1, VR2) bereitstellen kann.

7. Steuermodul, insbesondere Compact Disc (CD), Diskette oder dergleichen, auf dem ein Erzeugungsmodul (TL) abgespeichert ist und das dazu vorgesehen ist, im Zusammenhang mit einem Prozessor das Verfahren nach Anspruch 1 auszuführen.

8. Speichermittel, **dadurch gekennzeichnet, daß** darauf ein Erzeugungsmodul (TL) nach Anspruch 4 gespeichert ist.
